# EUROPEAN PATENT SPECIFICATION

(11) **EP 2 918 175 B1**
(45) Date of publication and mention of the grant of the patent: **19.08.2020**
(21) Application number: 15159106.2
(22) Date of filing: 13.03.2015
(51) Int. Cl.: A23L 29/10, A23L 2/385, A23L 3/46, A23L 2/39, A23L 2/56, A23L 27/00, A23L 23/10, B01D 1/18

(54) **Propylene glycol-free spray-dried flavour compositions and methods of producing the same**
PROPYLENGLYCOLFREIE SPRÜHGETROCKNETE GESCHMACKSZUSAMMENSETZUNGEN UND VERFAHREN ZUR HERSTELLUNG DAVON
COMPOSITIONS D'ARÔME SÉCHÉES PAR PULVÉRISATION SANS PROPYLÈNE GLYCOL ET PROCÉDÉS DE PRODUCTION DE CELUI-CI

(30) Priority: 13.03.2014 US 201414208463
(43) Date of publication of application: 16.09.2015
(73) Proprietor: INTERNATIONAL FLAVORS & FRAGRANCES INC., New York, NY 10019 (US)
(72) Inventor: Popplewell, Lewis Michael, Morganville, New Jersey 07751 (US); Hans, Keith Thomas, Princeton, New Jersey 08540 (US); Henson, LuLu, Plainsboro, New Jersey 08536 (US); Lavallee, Christopher Thomas, Morganville, New Jersey 07751 (US); Wolff, Eric Jesse, Chalfont, Pennsylvania 18914 (US); Wright, Maria, Princeton, New Jersey 08540 (US); Lee, Daniel Kaiping, Morganville, New Jersey 07751 (US); Gabbard, Ronald, Farmingdale, New Jersey 07727 (US)
(74) Representative: FRKelly

(56) References cited:
- WO-A2-2012/122010
- JP-A- 2003 055 688
- US-A- 4 093 750
- US-A- 4 276 312
- US-A- 5 124 162
- US-A1- 2003 228 395
- US-A1- 2004 086 619
- US-A1- 2005 031 769
- US-A1- 2009 317 532
- US-A1- 2013 022 728
- US-B2- 7 402 327

## Description

### Background

Many flavoring compounds in beverage preparation are essential oils such as orange, lemon, and grapefruit or relatively nonpolar mixtures with limited water solubility such as strawberry watermelon, fruit punch, peach mango, etc. To create flavor emulsions that result in optically clear beverages, nanoemulsions (particle size in the range from 50 to 150 nm range) composed of water and non-aqueous co-solvents such as propylene glycol and/or glycerin are used to produce visually translucent and metastable. Although nanoemulsions are capable of delivering optically clear consumable beverages, the production of propylene glycol-free flavored liquid concentrates and final ready-to-drink beverages has been challenging to the beverage industry.

In the food industry, spray drying, freeze-drying, vacuum continuous belt drying, and reduced pressure-low temperature drying with a vacuum dryer have been used to produce dry powders of flavor ingredients such as, for example, dry extracts of animals and plants.

Spray drying is a common industrial method for drying liquid solutions or slurries by spraying into a stream of hot gas. It is a rapid, one-step process for converting the feed liquid into a powder. Usually the drying gas is air, but nitrogen can also be used for special products needing oxygen-free conditions. The most common feed materials are aqueous-based solutions, emulsions and suspensions, where water is evaporated in the dryer. The liquid feed is fed to an atomizer, which is a device that breaks up the liquid stream into tiny droplets. This atomization takes place within the drying chamber so that the droplets are immediately exposed to hot air that initiates rapid moisture evaporation. The droplets become small particles of powder as the moisture is evaporated and they fall to the bottom of the drying chamber. Pressure nozzles, rotary disks, two-fluid nozzles, and the like are used as the atomizing unit. In many cases, the mean particle size (diameter) of the resulting dry powder is about 20 µm to 500 µm, and the drying time is as short as 5 to 30 seconds (see, Handbook of Chemistry and Engineering (1999) revised sixth edition, Maruzen Corporation, p. 770, p. 780). A four-fluid nozzle has also been developed, which has enabled mass-scale spray drying with a liquid droplet having a mean particle size of several micrometers.

The spray drying method is used in many cases of mass scale production. In general, to produce a large volume of powder in a short period of time, a solution or slurry is fed at a fast feed rate into a spray dryer, while the inlet temperature of the spray dryer and the outlet temperature thereof are elevated as high as possible, to dry the slurry at a high speed. For example, milk is dried at an inlet temperature of the spray dryer of 150 to 250°C and yeast is dried at the inlet temperature of 300 to 350°C. Drying at such high temperatures may negatively impact the flavor of the raw material itself and produce a dry powder with a burned odor. However, spray drying at a low temperature to avoid these disadvantages can increase process times and costs. See US 2005/0031769 and US Patent No. 6,482,433.

Spray-dried encapsulated flavors are created during the drying process when the aqueous carrier slurry forms a shell around the normally oil-based flavor core. During the drying process, a thin film of carrier material rapidly forms around the atomized droplet and selectively allows water to evaporate while retaining the flavor oil (Thijssen & Rulkens (1968) De Ingenieur 80:45-56). The shell protects the core against deterioration and volatile evaporation, but also allows the core to be released under desired conditions, for example, dissolution in water.

US2013022728 relates to spray-dried compositions capable of retaining volatile compounds and methods relating to the same. WO2012122010 also relates to spray-dried compositions capable of retaining volatile compounds and methods relating to the same. US2005031769 discloses a spray dry method capable of producing a dry powder retaining the savor and flavor of a raw material and having solubility without any thermal deterioration, at a mass scale. US4276312 discloses a free flowing, spray dried, rod-shaped particulate product, which is readily redispersible in water. US2004086619 discloses using surfactants in low concentrations in order to solubilize water-insoluble solids for inclusion in aqueous beverages. US4093750 discloses itrus flavored beverages having stabilized citrus oils which are stabilized with the use of a polyglycerol ester of an aliphatic acid. JP2003055688 discloses an edible oleaginous material-containing powdered material which transparently dissolves in water, excels in storage stability, and enables addition and incorporation of an edible oleaginous material such as a perfume, an oil-soluble pigment, and an oil-soluble functional material into high transparency-required beverages and comestibles. US2009317532 discloses compositions and methods for preparing foods and beverages that contain additives. US7402327 discloses using surfactants in low concentrations in order to solubilize water-insoluble solids for inclusion in aqueous beverages. US2003228395 discloses vitamin, mineral and nutrient delivery systems, and in particular beverage and solid food compositions and methods for the enhanced solubilization and delivery of fat-soluble compositions.

There has been a long felt need to spray dry natural and synthetic materials to provide intense fresh, authentic consumer preferred flavors in foodstuffs and other flavor-containing products. Likewise, there is a similar need to spray dry natural and synthetic materials to provide intense, fresh, authentic consumer preferred fragrances in consumer products.

### Summary of the Invention

This invention provides a method for producing a stable, propylene glycol-free and glycerin-free, spray-dried flavor composition. The method comprises dissolving dextrin and isomalt in water; forming an emulsion of the dissolved dextrin and isomalt with a surfactant selected from polyglyceryl-10 oleate, polyglyceryl-10 caprylate/caprate or polyoxyethylene (20) sorbitan monostearate; and with a flavor that contains volatile compounds, and wherein the flavor is selected from synthetic flavor and flavoring aromatics, and/or oils, oleo resins and oil extracts derived from plants, leaves, flowers, fruits, and combinations thereof; spray drying the emulsion in a spray dryer having an inlet temperature of less than 100°C and an air inlet dew point -10°C to 5°C; and further drying in a fluid bed chamber attached at the spray dryer outlet, wherein the temperature of the air of the fluid-bed unit is at or below the outlet temperature of the spray dryer. In other embodiments, the volatile compounds are acetaldehydes, dimethyl sulfides, ethyl acetates, ethyl propionates, methyl butyrates, or ethyl butyrates, which optionally have a boiling point of less than 200°C, less than 100°C, or less than 60°C. The spray-dried flavor composition includes a carrier material comprising dextrin and isomalt. Optionally, an air inlet temperature is in the range of 40°C to 99°C is contemplated, as are spray-dried flavor compositions having a water activity in the range of 0.1 to 0.6. A method of producing a liquid beverage or liquid beverage concentrate containing the spray-dried flavor composition and an optional acidulant is also provided.

### Brief Description of the Drawings

Figure 1 shows a comparison of sensory profiles of Orange Flavor between samples produced under different RH/Temperature conditions in a beverage tasting solution. *Directionally different, **Significantly different at p=0.05
Figure 2 shows a comparison of time intensity profiles of Orange Flavor between samples produced under different humidity/temperature conditions in sugar-free chewing gum. **Significantly different at p=0.05 at these elapsed times.
Figure 3 shows a comparison of sensory profiles of Berry Flavor between samples produced under different humidity/temperature conditions in a beverage tasting solution. ** Significantly different at p = 0.05.
Figure 4 shows a comparison of time intensity profiles of Berry Flavor between samples produced under different humidity/temperature conditions in sugar-free chewing gum. **Significantly different at p=0.05 at these elapsed times.
Figure 5 is a diagram of dryer airflow used in the production of the instant composition.

### Detailed Description of the Invention

It has now been found that particular spray drying techniques and certain optional surfactant systems results in stable and optically clear beverage liquid concentrates and final consumable beverages. When a spray dryer is used with an inlet temperature of less than 100°C and a dew point -10°C to 5°C, higher levels of volatile compounds can be retained. Spray drying in combination with surfactants reduces the need for using high pressure homogenization to create flavor nanoemulsions and provides cost-effective, stable and optically clear final beverage products whether flavored liquid concentrates or consumable drink upon dilutions, in particular low pH concentrates and beverages. As a particular advantage, the spray-dried composition produces optically clear beverages and liquid beverage concentrates that are propylene glycol- and glycerin-free, i.e., less than 2%, or preferably less than 0.5%, of propylene glycol or glycerin detectable in the liquid concentrate and less than 0.05%, or preferably less than 0.01%, in consumable beverages.

Accordingly, this invention provides a method for producing a stable, propylene glycol-free and glycerin-free, spray-dried flavor composition, the method comprising dissolving dextrin and isomalt in water; forming an emulsion of the dissolved dextrin and isomalt with a surfactant selected from polyglyceryl-10 oleate, polyglyceryl-10 caprylate/caprate or polyoxyethylene (20) sorbitan monostearate; and with a flavor that contains volatile compounds, and wherein the flavor is selected from synthetic flavor and flavoring aromatics, and/or oils, oleo resins and oil extracts derived from plants, leaves, flowers, fruits, and combinations thereof; spray drying the emulsion in a spray dryer having an inlet temperature of less than 100°C and an air inlet dew point -10°C to 5°C. For the purpose of this invention, stability is defined as a flavor quality and intensity that remains acceptable for use in end use applications. Preferably, a stable spray-dried flavor composition has a shelf-life of up to three years depending on storage conditions. Consumer data, as demonstrated in the examples herein, showed statistically significant preference for the flavors composition produced by the method of the present invention. The consumer preferred quality of the flavor composition is further supported by the attributes selected by consumers to describe the flavor quality of the prototypes.

Therefore, the present invention provides a method for producing such a spray-dried flavor composition. In accordance with the present invention, there is provided a method for producing a stable, propylene glycol-free and glycerin-free, spray-dried flavor composition comprises dissolving dextrin and isomalt in water; forming an emulsion of the dissolved dextrin and isomalt with a surfactant selected from polyglyceryl-10 oleate, polyglyceryl-10 caprylate/caprate or polyoxyethylene (20) sorbitan monostearate; and with a flavor that contains volatile compounds, and wherein the flavor is selected from synthetic flavor and flavoring aromatics, and/or oils, oleo resins and oil extracts derived from plants, leaves, flowers, fruits, and combinations thereof; spray drying the emulsion in a spray dryer with an inlet temperature of less than 100°C and a dew point -10°C to 5°C and further drying in a fluid bed chamber attached at the spray dryer outlet, wherein the temperature of the air of the fluid-bed unit is at or below the outlet temperature of the spray dryer. As a result of the instant method, the spray-dried flavor composition retains at least 20% of the volatile compounds originally contained in the flavor.

Unless otherwise specified, a flavor used in the method of the invention is a flavor that contains one or more volatile compounds. A variety of flavors can be used in accordance with the method of the present invention. Flavor is chosen from synthetic flavor and flavoring aromatics, and/or oils, oleo resins and oil extracts derived from plants, leaves, flowers, fruits, and combinations thereof. Representative flavor oils include, but are not limited to, spearmint oil, cinnamon oil, peppermint oil, clove oil, bay oil, thyme oil, cedar leaf oil, oil of nutmeg, oil of sage, and oil of bitter almonds. Also useful are artificial, natural or synthetic fruit flavors such as vanilla, chocolate, coffee, cocoa and citrus oil, including lemon, orange, grape, lime and grapefruit, and fruit essences including apple, pear, peach, strawberry, watermelon, raspberry, cherry, plum, pineapple, apricot and so forth. These flavors can be used individually or in admixture.

The volatile compounds of the instant flavor may include, but are not limited to, acetaldehyde, dimethyl sulfide, ethyl acetate, ethyl propionate, methyl butyrate, and ethyl butyrate. Flavors containing volatile aldehydes or esters include, e.g., cinnamyl acetate, cinnamaldehyde, citral, diethylacetal, dihydrocarvyl acetate, eugenyl formate, and p-methylanisole. Further examples of volatile compounds that may be present in the instant flavor oils include acetaldehyde (apple); benzaldehyde (cherry, almond); cinnamic aldehyde (cinnamon); citral, i.e., alpha citral (lemon, lime); neral, i.e., beta citral (lemon, lime); decanal (orange, lemon); ethyl vanillin (vanilla, cream); heliotropine, *i.e.,* piperonal (vanilla, cream); vanillin (vanilla, cream); alpha-amyl cinnamaldehyde (spicy fruity flavors); butyraldehyde (butter, cheese); valeraldehyde (butter, cheese); citronellal (modifies, many types); decanal (citrus fruits); aldehyde C-8 (citrus fruits); aldehyde C-9 (citrus fruits); aldehyde C-12 (citrus fruits); 2-ethyl butyraldehyde (berry fruits); hexenal, *i.e.,* trans-2 (berry fruits); tolyl aldehyde (cherry, almond); veratraldehyde (vanilla); 2,6-dimethyl-5-heptenal, *i.e.,* melonal (melon); 2-6-dimethyloctanal (green fruit); and 2-dodecenal (citrus, mandarin); cherry; or grape and mixtures thereof. The composition may also contain taste modulators and artificial sweeteners.

The physical, chemical, and odor properties of selected volatile compounds are presented in Table 1.

**TABLE 1**

| Compound | MW (g/mol) | Boiling Point (°C) | Water Solubility (g/L, approx.) | Odor * Descriptors* |
|---|---|---|---|---|
| acetaldehyde | 44.05 | 21 | soluble | pungent; ethereal |
| dimethyl sulfide | 62.02 | 36 | insoluble | cabbage |
| ethyl acetate | 88.11 | 77 | 90 | ethereal; fruity |
| ethyl propionate | 102.13 | 99 | 14 | sweet; fruity; ethereal |
| methyl butyrate | 102.13 | 102 | 15 | fruity pineapple p pp |
| ethyl butyrate | 116.16 | 121 | 6 | fruity; pineapple |

| | | | | |
|---|---|---|---|---|
| * The Good Scents Company and Merck Index, 12th Ed. | | | | |

The method of this invention is particularly useful in processing flavors with volatile compounds having a boiling point of less than 200°C, less than 150°C, less than 120°C, less than 100°C, less than 80°C, less than 60°C, less than 40°C, less than 20°C, or less than 0°C. Using such flavors, higher levels of volatile compounds are retained, which results in a sensory perceivable difference over conventional drying processes.

In addition to the flavor, an emulsifier or surfactant is used in the production of the instant spray-dried flavor composition. The suitable emulsifiers or surfactants are selected from polyglyceryl-10 oleate, polyglyceryl-10 caprylate/caprate or polyoxyethylene (20) sorbitan monostearate.

A spray-dried flavor composition may include a polysorbate, a polyglycerol fatty acid ester, diglyceride ester of diacetyltartaric acid, monoglyceride ester of diacetyltartaric acid or quillaja extract (soap-bark extract) as a surfactant. The active component in quillaja extract is a saponin, which can be present in an amount of about 10%, 20%, 30%, 40%, 50%, 60%, 70%, 80%, or 90% of saponin. Quillaja extract is available from commercial sources and may contain approximately 20% quillaja saponin. The surfactant may be a polysorbate or a polyglycerol fatty acid ester. More particularly, the polysorbate or polyglycerol fatty acid ester has a medium or long chain fatty acid containing 6-12 or 13-21 carbons, respectively.

As is known in the art, polysorbates are oily liquids derived from PEG-ylated sorbitan esterified with fatty acids. Polysorbates of use in method of this invention comprise polysorbate 60 (polyoxyethylene (20) sorbitan monostearate. Polysorbates are known in the art and commercially available from a number or sources.

Polyglycerol fatty acid esters are formed by reacting polymerized glycerols with edible fatty acids. Polyglycerol fatty acid esters of use in the method of this invention comprise polyglyceryl-10 oleate, and polyglyceryl-10 caprylate/caprate. Commercial sources of polyglycerol fatty acid esters include the POLYALDO series of surfactants available from Lonza.

The spray-dried flavor composition can contain between about 0.01% to 1% surfactant. The spray-dried flavor composition can contain between about 0.05% to 0.5% surfactant. The spray-dried flavor composition can contain between about 0.1% and 0.2% surfactant.

The method of the invention further includes the use of a carrier material to enhance processing productivity and flavor intensity. Such carriers comprise dextrin and isomalt.

The flavor, surfactant and carrier material are dissolved or emulsified in a solvent and subsequently spray-dried. The solvent is water; or a mixture of water and a volatile solvent. As is known in the art, a volatile solvent is a nonaqueous liquid with solvent properties with the characteristic of evaporating readily at room temperature and atmospheric pressure. Volatile solvents of particular use can include, but are not limited to, ethanol, ethyl acetate, acetone. Other suitable solvents include, but are not limited to, triglycerides, vegetable oils, animal fats, and triacetin.

Flavor emulsions are prepared according to standard preparation procedures. Briefly, the practice involves dispersing and dissolving the dry carrier materials in solvent until free of lumps. When using water as the solvent, it may be desirable to warm the water (e.g., to approximately 50°C) prior to adding the carrier material. The surfactant and flavor are then added under constant agitation until a homogeneous mixture is obtained. The emulsion may be further subjected to high shear or homogenized to reduce oil droplet size prior to spray drying. In particular embodiments, droplet sizes are reduced to less than 5 µm, less than 4 µm, less than 3 µm, less than 2 µm, less than 1 µm or less than 0.5 µm prior to spray drying.

The emulsion can contain between 40% and 70% by weight of flavor (including any solvent used to suspend the flavor) and/or carrier or more preferably between 55% and 65% flavor and/or carrier. The amount of flavor and/or carrier can be adjusted by using more or less water depending on the solubility of the carrier material and various factors related to efficient operation of the spray dryer. For example, the type and amount of carrier, amount of water, and/or amount of flavor can be adjusted so that the resulting emulsion has a viscosity suitable for feeding into a spray dryer to provide liquid droplets having a mean particle size (mean volume diameter) of between 10 µm and 200 µm. For example, when using spray nozzles, such as a three-fluid nozzle and a four-fluid nozzle, the viscosity of the feed slurry is preferably 500 cps or less, preferably 200 cps or less, and more preferably 80 cps or less. For a rotary atomizer (rotary disk), the viscosity is preferably 70,000 cps or less. Moreover, the feed slurry (*i.e.,* emulsion) can be heated (*e.g.,* to near the inlet temperature) or cooled (*e.g.,* to 15°C) immediately before adding it to the spray dryer to modify fluidity. In addition, certain flavors, especially those that are more water-soluble, act as plasticizers thereby making processing more difficult due to stickiness. In this respect, the ratios of carrier materials can be modified. Therefore, various factors can be appropriately selected or modified for use in combination with different spray dry apparatuses.

Commercially available spray dryers can be used as in the practice of the method of the present invention. For example, a spray dryer with a vertical parallel flow function can be used. The spray dryer should be a system with a dehumidifying and drying function. For example, a spray dryer capable of blowing a high volume of desiccated air with a dew point of less than 5°C is particularly preferable. For a spray dryer with no dehumidifying and drying function, the spray dryer is inevitably arranged with a dry dehumidifier, *e.g*., a honeycomb-type rotary dehumidifier (*e.g.,* Nichias Corporation or Sweden PROFLUTE Corporation). Suitable spray dryers include the micromist spray dryer and the hybrid granulator series manufactured by Fujisaki Electric Co., Ltd.; the fluidized spray dryer FSD with internal fluid bed as manufactured by Niro Corporation; the fluid granulation spray dryer and L-8 type spray dryer manufactured by Ogawara (Japan); the DL-21 type and GB-21 type spray dryers manufactured by Yamato Scientific Co., Ltd., and Anhydro Spray Bed Dryer manufactured by SPX Corporation.

The spray dryer can be capable of generating liquid droplets (particles) having a mean particle size (mean volume diameter) of between about 1 µm to about 200 µm. When the liquid droplets are dried, a dry powder having a mean particle size (mean volume diameter) of about 1 µm to about 100 µm is preferred for retention of the flavor oil.

Among the operation conditions of the spray drying apparatus, in certain embodiments the outlet temperature of the spray drying apparatus is between 20°C and 60°C, preferably 30 to 60°C, and more preferably 40 to 60°C. For the purposes of the method of this invention, the outlet temperature of the spray dryer means the product temperature of the dry powder in the vicinity of the powder collection part of the spray dryer. For the spray dryer of the vertical parallel flow type, the outlet temperature means the temperature (exhaust gas temperature) at the exhaust part thereof.

The average inlet air temperature of the spray drying apparatus is less than 100°C. In certain embodiments, the average inlet air temperature of the spray drying apparatus is in the range of 40°C to 99°C, more preferably 60°C to 99°C and most preferably 80°C to 99°C. For the purposes herein, the average inlet air temperature is a sum total of all inlet air streams, *e.g*., main chamber inlet air and the inlet air to the fluid bed(s).

As a particular feature of the method of the instant invention, it is desirable that production parameters including temperature, pressure and humidity, are controlled to achieve an air inlet dew point in the range of -10°C to 5°C. In particular embodiments, the air inlet dew point of the spray drying apparatus is 5°C or less, preferably 0°C or less, more preferably is -5°C or less, and most preferably -7.5°C or less. As is known in the art, dew point temperature is a function of air temperature and %RH and can be determined using a psychrometric chart or calculator. Dew point temperature is important as it corresponds directly to the actual amount of water in the air on a mass basis.

Once the spray-dried flavor composition is dried or partially dried in the spray drier, the resulting powder can be used in the production of food product, in particular a beverage or beverage concentrate, pharmaceuticals, consumer products and the like. Alternatively, particular embodiments feature the additional step of further drying the spray-dried flavor composition in a fluid-bed chamber attached at the outlet of the spray dryer. Accordingly, certain embodiments feature the use of an integrated fluid-bed spray dryer to produce the instant spray-dried flavor composition. This secondary drying can, *e.g.,* further remove entrapped solvent, residual moisture, and/or water of molecular hydration, to provide a composition of powder particles with significantly lower moisture content that is stable in storage, *e.g.,* for extended periods at ambient temperatures.

In accordance with this embodiment, the temperature of the air supplying the fluid-bed unit is maintained at or below the outlet temperature of the spray dryer in order to maintain the benefit of volatile flavor retention. Thus, the inlet temperature of the fluid-bed unit is between 40°C and 99°C, preferably 50 to 95°C, and more preferably 60 to 90°C; and the inlet dew point is in the range of -10 to 5°C.

In some embodiments, the fluid-bed has a single zone. In other embodiments, the fluid-bed unit has one, two, three or more zones, wherein each zone has a different temperature and air flow rate. In certain embodiments, the fluid-bed unit has three zones, each varying in temperature by at least 10°C. In particular embodiments, the fluid-bed unit has three zones, each varying in temperature by 10°C to 20°C. By way of illustration, dry powder from a spray dryer with an outlet temperature of 60°C could have a first fluid-bed zone at 60°C, a second bed zone of 45°C and a third zone of 25°C.

Secondary drying can continue, e.g., for about 5 minutes to about 5 hours, or about 10 minutes to about 1 hour, and most preferably about 20 to 40 minutes until residual moisture is reduced to a desired level. In particular embodiments, secondary drying continues until the residual moisture of the powder particles is below 5 percent.

As used herein, "dry," "dried," and "substantially dried" encompass those compositions with from about 0% to about 15% water. Preferably, the instant composition will have a water activity of 0.1 to 0.6, or more desirably 0.2 to 0.5, and most preferably from 0.2 to 0.4 wherein said levels of dryness can be achieved with or without secondary drying.

Drying can also occur in the total or partial absence of ambient air. In this respect, drying can occur in the presence of CO₂ or other drying gases (*e.g.,* nitrogen). Accordingly, in particular embodiments, the air of the spray dryer is partially or wholly composed of carbon dioxide or nitrogen. In accordance with this embodiment, partial carbon dioxide or nitrogen is intended to mean a level in the range of 80-99% carbon dioxide and/or nitrogen.

Once the spray-dried flavor composition reaches the desired level of dryness, it can be used in a variety of consumer, food, or pharmaceutical products. In particular, the instant spray-dried flavor composition finds application in gums, confections, oral care products, beverages, snacks, dairy products, soups, sauces, condiments, detergents, fabric softeners and other fabric care products, antiperspirants, deodorants, talc, kitty litter, hair care and styling products, personal care products, air fresheners, cereals, baked goods and cleaners. Additionally, the spray-dried powder may be further processed by extrusion, coating, agglomeration, blending, compaction to impart additional functionality or benefits.

In specific embodiments, the instant spray-dried flavor composition is used in beverages and clear beverage liquid concentrates. Accordingly, in addition to spray-dried flavor powders, the present invention also provides a method for producing optically clear final beverage products or liquid beverage concentrates containing the spray-dried flavor composition produced by the method of the invention. In particular embodiments, the final beverage or beverage concentrates described herein provide enhanced flavor stability to ingredients that are highly prone to degradation in acidic solutions despite the concentrates having a low pH (*i.e*., about 1.8 to about 4).

As used herein, the term "liquid beverage concentrate" means a liquid composition that can be diluted with another liquid, such as an aqueous, potable liquid to provide a final beverage or added to a food product prior to being consumed. The phrase "liquid" refers to a non-gaseous, flowable, fluid composition at room temperature (i.e., 70°F). The term "final beverage" as used herein means a beverage that has been prepared by diluting the concentrate to provide a beverage in a potable, consumable form. In some aspects, the concentrate is non-potable due to acidulant content and/or flavor intensity. By way of example to clarify the term "concentration," a concentration of 75 times (*i.e*., "75X") would be equivalent to 1 part concentrate to 74 parts water (or other potable liquid) to provide the final beverage. In other words, the flavor profile of the final beverage is taken into account when determining an appropriate level of dilution, and thus concentration, of the liquid beverage concentrate. The dilution factor of the concentrate can also be expressed as the amount necessary to provide a single serving of concentrate.

The viscosity, pH, and formulations of the concentrates will depend, at least in part, on the intended dilution factor. In one approach, a moderately concentrated product may be formulated to be diluted by a factor of at least 5 times to provide a final beverage, which can be, for example, a 0.24 liter (8 ounce) beverage. In one aspect, the concentrate is formulated to be diluted by a factor of about 5 to about 15 times to provide a final beverage. In this form, the liquid concentrate has a pH of about 1.8 to about 4, or more particularly, 1.8 to about 2.9, about 2.0 to about 3.1, or about 2.0 to about 2.5; and a viscosity of about 7.5 to about 100 cP, about 10 to about 100 cP, about 15 to about 100 cP, about 10 to about 50 cP, or about 10 to about 20 cP, as measured using Spindle S00 at 50 rpm at 20°C with a Brookfield DVII + Pro Viscometer. In some embodiments, the concentrate includes at least about 0.1 to about 15 percent acidulant by weight of the concentrate. Any edible, food grade organic or inorganic acid, such as, but not limited to, citric acid, malic acid, succinic acid, acetic acid, hydrochloric acid, adipic acid, tartaric acid, fumaric acid, phosphoric acid, lactic acid, sodium acid pyrophosphate, salts thereof, and combinations thereof can be used, if desired. The selection of the acidulant may depend, at least in part, on the desired pH of the concentrate and/ or taste imparted by the acidulant to the diluted final beverage. In another aspect, the amount of acidulant included in the concentrate may depend on the strength of the acid. For example, a larger quantity of lactic acid would be needed in the concentrate to reduce the pH in the final beverage than a stronger acid, such as phosphoric acid. In some embodiments, a buffer can be added to the concentrate to provide for increased acid content at a desired pH. Suitable buffers include, for example, a conjugated base of an acid, gluconate, acetate, phosphate or any salt of an acid (*e.g*., sodium citrate and potassium citrate). In other instances, an undissociated salt of the acid can buffer the concentrate.

The beverages or concentrates produced by the method of the invention can include one or more juices or juice concentrates (such as at least a 4X concentrated product) from fruits or vegetables for bulk solid addition. In one aspect, the juice or juice concentrate may include, for example, coconut juice (also commonly referred to as coconut water), apple, pear, grape, orange, potato, tangerine, lemon, lime, tomato, carrot, beet, asparagus, celery, kale, spinach, pumpkin, strawberry, raspberry, banana, blueberry, mango, passionfruit, peach, plum, papaya, and combinations. The juice or juice concentrates may also be added as a puree, if desired.

As indicated, concentrates can be added to potable liquids to form flavored beverages. In some aspects, the concentrate may be non-potable (such as due to the high acid content and intensity of flavor). For example, the beverage concentrate can be used to provide flavor to water, cola, carbonated water, tea, coffee, seltzer, club soda, the like, and can also be used to enhance the flavor of juice. In one embodiment, the beverage concentrate can be used to provide flavor to alcoholic beverages, including but not limited to flavored champagne, sparkling wine, wine spritzer, cocktail, martini, or the like. In particular embodiments, the concentrate is used in an optically clear beverage.

Beverage concentrates can also be combined with a variety of food products to add flavor to the food products. For example, concentrates can be used to provide flavor to a variety of solid, semi-solid, and liquid food products, including but not limited to oatmeal, cereal, yogurt, strained yogurt, cottage cheese, cream cheese, frosting, salad dressing, sauce, and desserts such as ice cream, sherbet, sorbet, and Italian ice. Appropriate ratios of the beverage concentrate to food product or beverage can readily be determined by one of ordinary skill in the art.

As used herein, all percentages are weight percent unless otherwise noted, L is understood to be liter, kg is understood to be kilogram, and g to be gram. In addition, the amounts, sizes, temperatures and percentages provided herein are understood to include exact numbers and approximations.

The following examples are provided as specific embodiments of the present invention.

### Example 1: Formulations for Dry Flavor Powders (not according to invention)

A comparison between modified formulas and conventional control formulas was conducted. Exemplary Control and Modified formulas of dry flavor powders are listed in Table 2.

**TABLE 2**

| Component | Control | Modified | Control | Modified |
|---|---|---|---|---|
| Orange Flavor | 20% | 16% | | |
| Berry Flavor | | | 11% | 16% |
| Modified starch | 10% | 8% | 72% | 8 % |
| Carbohydrates (e.g., sugar, corn syrup, maltodextrin) | 70% | 76% | 17% | 76% |

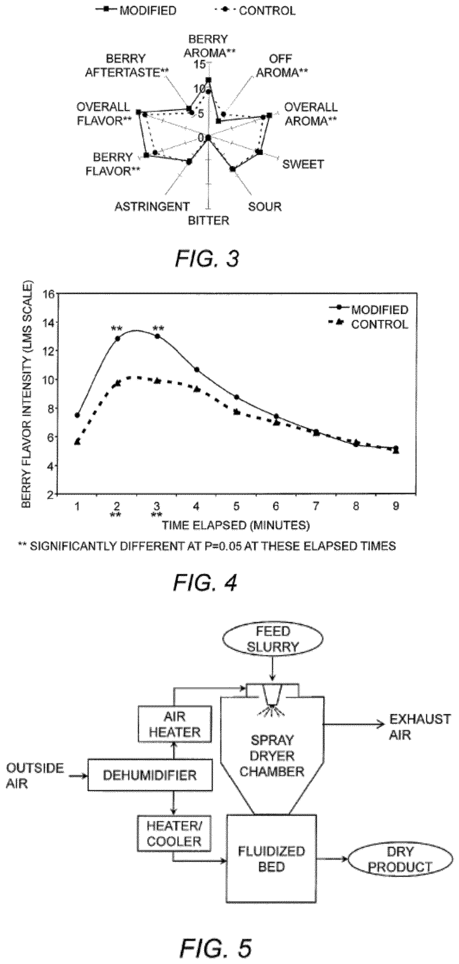

Control powders were produced by a conventional process conditions and Modified powders were produced by the instant modified process (Figure 5), according to the conditions listed in Table 3. In both cases, a conventional spray dryer without an integrated fluid-bed was used.

**TABLE 3**

| Spray Dryer Operating Paramet er | Standard | Modified |
|---|---|---|
| Inlet air temperature (°C) | 170 - 210 | < 100 |
| Inlet air humidity (g H₂O/kg dry air) | 2 - 18 | 0 - 4 |
| Outlet air temperature (°C) | 80 - 100 | 35 - 55 |
| Outlet air humidity (g H₂O/kg dry air) | 45 - 55 | 10 - 20 |
| Atomizer type | Rotary Disc | Rotary Disc or Nozzle |

All formulations ran well with minimal hold-up, sticking, or other issues in the conventional spray dryer.

### Example 2: Retention of Volatile Compounds in Modified Orange Flavor Formulation (not according to invention)

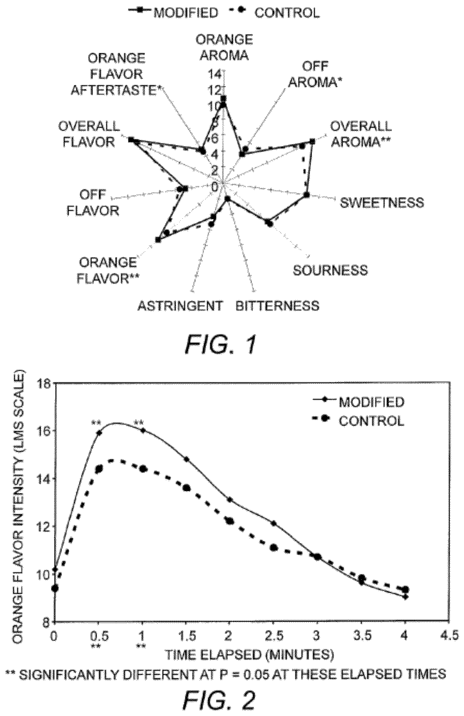

Using GC-FID (gas chromatography-flame ionization detector) analysis, the volatile profile of the Orange Flavor formulations in Example 1 was determined. This analysis indicated that the retention of specific volatile materials for the Modified powder compared to the level in the emulsion were approximately 72%, 75%, and 52% for ethyl propionate, ethyl butyrate, and acetaldehyde, respectively. Table 4 indicated the ratio of volatiles retained in the Modified powder in comparison to the Control powder. Sensory tests showed benefit of the Modified powder over the Control powder in a beverage tasting solution (significantly greater overall aroma and orange flavor; Figure 1) and in chewing gum (significantly greater orange flavor intensity at the 30 and 60 second intervals; Figure 2) .

**TABLE 4**

| Orange Flavor | Ethyl Propionate | Ethyl Butyrate | Acetaldehyde |
|---|---|---|---|
| Modified | 2.3 | 1.6 | 1.8 |
| Control | 1.0 | 1.0 | 1.0 |

### Example 3: Retention of Volatile Compounds in Modified Berry Flavor Formulation (not according to invention)

Using GC-FID analysis, the volatile profile of the Berry Flavor formulations in Example 1 was determined. This analysis indicated that the retention of specific volatile materials for the Modified powder compared to the level in the emulsion were approximately 24%, 35%, and 87% for dimethyl sulfide, ethyl acetate, and ethyl butyrate, respectively. Table 5 indicated the ratio of volatiles retained in the modified powder in comparison to the Control powder. Sensory tests showed benefit of the Modified powder over the Control powder in a beverage tasting solution (significantly greater berry aroma and flavor, among others; Figure 3) and in chewing gum (significantly greater berry flavor intensity at the 30 and 60 second intervals; Figure 4).

**TABLE 5**

| Berry Flavor | Dimethyl Sulfide | Ethyl Acetate | Ethyl Butyrate |
|---|---|---|---|
| Modified | 12.7 | 13.4 | 4.5 |
| Control | 1.0 | 1.0 | 1.0 |

### Example 4: Effects of Dryer Process Temperatures (not according to invention)

To determine the effect of dryer process temperatures on the physical properties and flavor quality of a citrus flavor, different spray dryer air inlet and outlet temperatures were utilized. The resulting volatile compound content, and flavor strength and aroma as determined by an expert panel are presented in Table 6.

**TABLE 6**

| Inlet/Outlet Temperature (°C) | Water activity | Acetaldehyde Content (% of Nominal) | Flavor Strength Ranking | Aroma Strength Ranking |
|---|---|---|---|---|
| 190/90 | 0.16 | 37 | 1 | 1 |
| 93/45 | 0.27 | 42 | 2* | 2* |

| | | | | |
|---|---|---|---|---|
| *2 = higher. | | | | |

In addition to the above results, both spray-dried compositions exhibited free-flowing properties after 7 weeks at 40°C in a closed container. These results indicate that an air inlet temperature below 100°C reduces loss of volatile flavor compounds, provides improved sensory intensity, while maintaining water activity of the product at a level that prevents caking when exposed to above ambient temperatures.

### Example 5: Stability of Fruit and Mint Flavors in Chewing Gum (not according to invention)

The stability of apple and mint flavors in chewing gum were evaluated. Flavor compositions were spray-dried in accordance with the instant method, formulated with guillaja extract or soap bark extract and incorporated into chewing gum. The stability of the flavor was evaluated by an expert panel after storage at 32°C for 2 or 12 weeks or 21°C for 12 weeks. The results of prototype apple-flavored gum, as compared to a control, are presented in Table 7 and Figure 6. The control samples were spray dried flavors processed using conventional drying conditions.

**TABLE 7**

| Apple Flavored Gum | Prototype Flavor Stability | | | Control Flavor Stability | | |
|---|---|---|---|---|---|---|
| | 32°C | | 21°C | 32°C | | 21°C |
| | 2 weeks | 12 weeks | 12 weeks | 2 weeks | 12 weeks | 12 weeks |
| Candy Banana | 4.5 | 4.5 | 4 | 4 | 2 | 3 |
| Green Apple | 5.5 | 4 | 4.5 | 3 | 2 | 3 |
| Ripe Estery | 6 | 5 | 5.5 | 4 | 3 | 4 |
| Sweet | n.d. | 6 | 6 | n.d. | 5 | 5 |
| Sour | n.d. | 4 | 4 | n.d. | 3 | 3.5 |
| Salivating | n.d. | 4 | 5 | n.d. | 3 | 4 |
| Astringent | n.d. | 3 | 3 | n.d. | 2.5 | 3 |

| | | | | | | |
|---|---|---|---|---|---|---|
| Scale: 10-point scale (10=highest). Expert panel of four testers. n.d.= not determined. | | | | | | |

The analysis presented in Table 7 indicates that the apple flavor produced by the instant method was as stable as a conventional spray-dried composition at 21°C (12 weeks) or 32°C (12 weeks). However, the impact of the apple flavor produced by the instant method was stronger after storage at 32°C for 12 weeks than that of the conventional spray-dried composition stored at 21°C for 12 weeks.

The results of prototype mint-flavored gum, as compared to a control, are presented in Table 8.

**TABLE 8**

| Mint Flavored Gum | Prototype Flavor Stability | | | Control Flavor Stability | | |
|---|---|---|---|---|---|---|
| | 32°C | | 21°C | 32°C | | 21°C |
| | 2 weeks | 12 weeks | 12 weeks | 2 weeks | 12 weeks | 12 weeks |
| Peppermint | 6 | 4.5 | 5.5 | 4.5 | 3 | 3.5 |
| Menthol | 5.5 | 4.5 | 5.5 | 5.5 | 3 | 3.5 |
| Sweet Creamy | 5 | 4 | 4.5 | 4.5 | 3.5 | 3.5 |
| Sweet | n.d. | 6.5 | 7 | n.d. | 6 | 7 |
| Bitter | n.d. | 1 | 1 | n.d. | 1 | 1 |
| Astringent | n.d. | 1 | 1 | n.d. | 1 | 1 |
| Off-note (plastic) | n.d. | 0 | 0 | n.d. | 1 | 3 |

| | | | | | | |
|---|---|---|---|---|---|---|
| Scale: 10-point scale (10=highest). Four testers. n.d.= not determined. | | | | | | |

The analysis presented in Table 8 indicates that the mint flavor produced by the instant method was as stable as a conventional spray-dried composition at 21°C (12 weeks) or 32°C (12 weeks). However, the impact of the mint flavor produced by the instant method was stronger after storage at 32°C for 12 weeks than that of the conventional spray-dried composition stored at 21°C for 12 weeks.

Overall, the results of this analysis indicated that the desirable sensory attributes of apple and mint flavors were better maintained in chewing gum using the prototype flavor over 12 weeks at 32°C.

### Example 6: Stability of Raspberry Flavor in Powdered Soft Drink Mix

The stability of raspberry flavor in powdered soft drink mix was evaluated. A raspberry flavor composition was spray-dried in accordance with the instant method, incorporated into a powdered soft drink mix, and the stability of the flavor was evaluated by an expert panel after storage for 8 weeks at 38°C. The results of the prototype soft drink mix containing the instant spray-dried flavor composition, as compared to a control, are presented in Table 9. The control sample was a spray dry flavor processed using conventional drying conditions.

**TABLE 9**

| Sample | Degree of Difference * | Description |
|---|---|---|
| Prototype | 9 | No off-notes present. Flavor attributes similar to refrigerated reference. |
| Control | 7 | Lacking fullness, sweetness, loss of impact and juiciness compared to refrigerated reference. |

| | | |
|---|---|---|
| *Scale: 1-3: very large difference, off-notes present; 10: not different from refrigerated reference. | | |

This analysis indicated that after 8 weeks of accelerated storage, the raspberry prototype maintained flavor quality.

### Example 7: Evaluation of Savory Broths

Spray-dried flavor compositions, prepared in accordance with the instant method, were incorporated into savory broths and attributes of the broths were assessed by a panel of consumers. The attributes of the prototype broths, as compared to a control, are presented in Table 10. The control broths were prepared from spray dry flavors processed using conventional drying conditions.

**TABLE 10**

| Flavor Type | % Preference for Prototype* | Attributes** Prototype vs. Control |
|---|---|---|
| Chicken | 77 (N=65, p=0.0001) | More white meat flavor, fresher, more balanced, rounder flavor, more overall aroma |
| Beef | 59 (N=63, p=0.17) | More overall aroma, more roasted flavor, bolder flavor, more memorable |

| | | |
|---|---|---|
| *Paired comparison forced choice preference test among category users. **Significantly different at greater than or equal to 90% confidence interval. | | |

Consumer data showed statistically significant preference for the prototype flavors. This is further supported by the attributes selected by consumers to describe the flavor quality of the prototypes.

### Example 8: Sensory Stability of Neat Powders in High Barrier Packaging

The stability of various flavor prototypes in high barrier packaging (FRESHTEK) was assessed after storage for 6, 12, or 18 weeks at 40°C. The attributes of the prototype powders are presented in Table 11.

**TABLE 11**

| Prototype | Description* | | |
|---|---|---|---|
| | 6 weeks | 12 weeks | 18 weeks |
| Peach 11-71 | Acceptable | Acceptable | Acceptable |
| Apple 11-58 | Acceptable | Acceptable Slight off-notes | Borderline Slight off-notes, noticeably weaker than reference |
| Orange Valencia 11-299 | Acceptable | Acceptable No oxidized notes | Acceptable No oxidized notes |
| Lime 11-331 | Acceptable | Acceptable No oxidized notes, slightly weaker than reference | Borderline No oxidized notes, noticeably weaker than reference |
| Lemon Brazilian 11-315 | Acceptable | Acceptable No oxidized notes | Acceptable No oxidized notes |

| | | | |
|---|---|---|---|
| *Expert panel evaluation, reference sample was kept frozen during storage study. | | | |

### Example 9: Propylene Glycol-Fee Dry Powders

*Sample Preparation and Processing.* Propylene glycol (PG)-free dry powder samples (Table 12) were prepared, which included three flavor carrier matrices coupled with four surfactant systems.

**TABLE 12**

| Sample | Carrier Material | Surfactant |
|---|---|---|
| 1 | Sodium alginate, NUTRIOSE, Isomalt | Q-NATURALE 200, DATEM |
| 2 | NUTRIOSE, Isomalt | POLYALDO 10-1-O |
| 3 | NUTRIOSE, Isomalt | POLYALDO 10-1-CC |
| 4 | NUTRIOSE, Isomalt | Q-NATURALE 200, DATEM |
| 5 | NUTRIOSE, Isomalt | Polysorbate 60 |
| 6 | NUTRIOSE, Isomalt, gum acacia | None |

### Z Samples 1, 4, 6 not according to invention.

Feed emulsion samples were prepared using the standard emulsion preparation procedures where carrier materials (NUTRIOSE, Isomalt, sodium alginate, gum acacia) were first completely solubilized in warm water (approximately 50°C) using a Lightnin overhead mixer. Polysorbate 60 (polyoxyethylene (20) sorbitan monostearate), Q-NATURALE 200 (quillaja extract), DATEM (diacetyl tartaric acid esters of monoglyceride), POLYALDO 10-1-O (polyglyceryl-10 oleate), and POLYALDO 10-1-CC (polyglyceryl-10 caprylate/caprate) were added as surfactants into the solution under constant mixing until fully dispersed. Flavor oil (e.g., strawberry watermelon) was homogenized into the surfactant-containing carrier solution under high-shear mixing to reduce the mean particle size less than 3 µm. Feed emulsion was then dried in a SPX/Anhydro spray dryer with a customized spray dry/fluid-bed (dryer outlet temperature: 55°C; outlet air relative humidity: 18% RH; and fluid-bed air temperature: 65°C). All PG-free strawberry watermelon dry powders were prepared at 20% (dry basis) payloads with water activity below 0.3.

*Liquid Concentration Sample Preparation and Stability.* Liquid concentrate base was prepared per commercial formulae that contain citrate salts, citric acid, malic acid, and water up to 60 weight percent, where the base solution pH ranged from 2.0 to 3.0. Beverage liquid concentrate samples were prepared by mixing 2.5% of each powder sample (Samples 1-6), 17.5% water, and 80% of the aforementioned liquid concentrate base under constant agitation until the powder was fully dissolved.

Each flavored liquid concentrate sample was stored at 32°C (90°F) and stability observations were made on a weekly basis. The results of this analysis are presented in Table 13.

**TABLE 13**

| Sample | Day 1 | Day 7 | Day 14 |
|---|---|---|---|
| 1 | Hazy | Precipitate formation | Precipitate formation |
| 2 | Hazy | Clear | Clear |
| 3 | Hazy | Clear | Clear |
| 4 | Hazy | Precipitate formation | Precipitate formation |
| 5 | Clear | Clear | Clear |
| 6 | Clear | Clear | Clear |

It was apparent from this analysis that samples 2, 3, 5, and 6 not only delivered PG-free flavored beverage liquid concentrates but also achieved the desired physical stability in the low pH solution. Upon 120 times dilution with water of the flavored liquid concentrate, final consumable beverage solutions of samples 2, 3, 5, and 6 remained optically clear.

## Claims

1. A method for producing a stable, propylene glycol-free and glycerin-free, spray-dried flavor composition, the method comprising
dissolving dextrin and isomalt in water;
forming an emulsion of the dissolved dextrin and isomalt with a surfactant selected from polyglyceryl-10 oleate, polyglyceryl-10 caprylate/caprate or polyoxyethylene (20) sorbitan monostearate; and with a flavor that contains volatile compounds, and wherein the flavor is selected from synthetic flavor and flavoring aromatics, and/or oils, oleo resins and oil extracts derived from plants, leaves, flowers, fruits, and combinations thereof;
spray drying the emulsion in a spray dryer having an inlet temperature of less than 100°C and an air inlet dew point -10°C to 5°C; and
further drying in a fluid bed chamber attached at the spray dryer outlet, wherein the temperature of the air of the fluid-bed unit is at or below the outlet temperature of the spray dryer.

2. The method of claim 1, wherein the volatile compounds are acetaldehydes, dimethyl sulfides, ethyl acetates, ethyl propionates, methyl butyrates, or ethyl butyrates.

3. The method of claim 1 or 2, wherein the volatile compounds have a boiling point of less than 200°C, less than 100°C, or less than 60°C.

4. The method of any one of claims 1 to 3, wherein the air inlet temperature is in the range of 40°C to 99°C.

5. The method of any one of claims 1 to 4, wherein the water activity of the composition is in the range of 0.1 to 0.6.

6. A method of producing a liquid beverage or liquid beverage concentrate, the method comprising the steps of;
providing a spray-dried flavor composition produced by the method of any one of claims 1 to 5; and
diluting the spray-dried flavor composition by adding a liquid.

7. The method of claim 6, wherein the method further comprises adding an acidulant to the spray-dried flavor composition.

## Patentansprüche

1. Verfahren für die Herstellung einer stabilen, Propylenglycol-freien und Glycerinfreien, sprühgetrockneten Aromastoffzusammensetzung, wobei das Verfahren Folgendes:
Lösen von Dextrin und Isomalt in Wasser;
Bilden einer Emulsion des gelösten Dextrins und Isomalts mit einem Tensid, das aus Polyglyceryl-10-oleat, Polyglyceryl-10-caprylat/-caprat oder Polyoxyethylen-(20)-sorbitanmonostearat ausgewählt ist; und mit einem Aromastoff, der flüchtige Verbindungen enthält, und wobei der Aromastoff aus Folgenden ausgewählt ist:
synthetischem Aromastoff und aromatisierenden Aromaten und/oder Ölen, Oleoharzen und Ölextrakten, die von Pflanzen, Blättern, Blüten, Früchten und Kombinationen davon stammen;
Sprühtrocknen der Emulsion in einem Sprühtrockner, der eine Einlasstemperatur von weniger als 100 °C und einen Einlasstaupunkt von Luft von -10 °C bis 5 °C aufweist; und
weiteres Trocknen in einer Wirbelschichtkammer, die an dem Sprühtrocknerauslass angebracht ist, wobei die Temperatur der Luft der Wirbelschichteinheit bei oder unterhalb der Auslasstemperatur des Sprühtrockners liegt.

2. Verfahren nach Anspruch 1, wobei die flüchtigen Verbindungen Folgende sind: Acetaldehyde, Dimethylsulfide, Ethylacetate, Ethylpropionate, Methylbutyrate oder Ethylbutyrate.

3. Verfahren nach Anspruch 1 oder 2, wobei die flüchtigen Verbindungen einen Siedepunkt von weniger als 200 °C, weniger als 100 °C oder weniger als 60 °C aufweisen.

4. Verfahren nach einem der Ansprüche 1 bis 3, wobei die Lufteinlasstemperatur in dem Bereich von 40 °C bis 99 °C liegt.

5. Verfahren nach einem der Ansprüche 1 bis 4, wobei die Wasseraktivität der Zusammensetzung in dem Bereich von 0,1 bis 0,6 liegt.

6. Verfahren zur Herstellung eines flüssigen Getränks oder flüssigen Getränkekonzentrats, wobei das Verfahren die folgenden Schritte umfasst:
Bereitstellen einer sprühgetrockneten Aromastoffzusammensetzung, die durch das Verfahren nach einem der Ansprüche 1 bis 5 hergestellt wird; und
Verdünnen der sprühgetrockneten Aromastoffzusammensetzung durch Zugeben einer Flüssigkeit.

7. Verfahren nach Anspruch 6, wobei das Verfahren weiter das Zugeben eines Säuerungsmittels zu der sprühgetrockneten Aromastoffzusammensetzung umfasst.

## Revendications

1. Méthode de production d'une composition d'arôme séchée par pulvérisation, stable, exempte de propylène glycol et exempte de glycérol, la méthode comprenant les étapes consistant à :
solubiliser de la dextrine et de l'isomalt dans de l'eau ;
former une émulsion de la dextrine et de l'isomalt solubilisés avec un agent tensioactif choisi parmi l'oléate de polyglycérol-10, le caprylate/caprate de polyglycérol-10 ou le monostéarate de sorbitane polyoxyéthylène (20) ; et avec un arôme qui contient des composés volatils, et où l'arôme est choisi parmi un arôme synthétique et des substances aromatiques aromatisantes, et/ou des huiles, des oléorésines et des extraits d'huile dérivés de plantes, de feuilles, de fleurs, de fruits, et des combinaisons de ceux-ci ;
sécher par pulvérisation l'émulsion dans un séchoir-atomiseur ayant une température d'entrée inférieure à 100°C et un point de rosée d'entrée d'air allant de -10°C à 5°C ; et
sécher davantage dans une chambre de lit fluidisé fixée au niveau de la sortie du séchoir-atomiseur, où la température de l'air de l'unité de lit fluidisé est égale ou inférieure à la température de sortie du séchoir-atomiseur.

2. Méthode selon la revendication 1, dans laquelle les composés volatils sont des acétaldéhydes, des diméthylsulfures, des acétates d'éthyle, des propionates d'éthyle, des butyrates de méthyle, ou des butyrates d'éthyle.

3. Méthode selon la revendication 1 ou 2, dans laquelle les composés volatils possèdent un point d'ébullition inférieur à 200°C, inférieur à 100°C, ou inférieur à 60°C.

4. Méthode selon l'une quelconque des revendications 1 à 3, dans laquelle la température d'entrée de l'air se trouve dans la plage allant de 40°C à 99°C.

5. Méthode selon l'une quelconque des revendications 1 à 4, dans laquelle l'activité de l'eau de la composition se trouve dans la plage allant de 0,1 à 0,6.

6. Méthode de production d'une boisson liquide ou d'un concentré de boisson liquide, la méthode comprenant les étapes consistant à :
fournir une composition d'arôme séchée par pulvérisation, produite par la méthode selon l'une quelconque des revendications 1 à 5 ; et
diluer la composition d'arôme séchée par pulvérisation par l'addition d'un liquide.

7. Méthode selon la revendication 6, la méthode comprenant en outre l'addition d'un acidulant à la composition d'arôme séchée par pulvérisation.
